# EUROPÄISCHE PATENTANMELDUNG

(11) **EP 4 201 489 A1**
(43) Veröffentlichungstag der Anmeldung: **28.06.2023**
(21) Anmeldenummer: 22214903.1
(22) Anmeldetag: 20.12.2022
(51) Int. Cl.: A63B 21/005, G09B 19/00, A63B 21/00

(54) **TRAININGSGERÄT UND VERFAHREN ZUM SIMULIEREN EINER RUDERBEWEGUNG**

(30) Priorität: 23.12.2021 DE 102021134578
(71) Anmelder: Augletics GmbH, 15712 Königs Wusterhausen (DE)
(72) Erfinder: Holstein, Flavio, 15712 Königs Wusterhausen (DE); Hauer, Tom, 15712 Königs Wusterhausen (DE); Kötitz, Stefan, 15712 Königs Wusterhausen (DE)
(74) Vertreter: Bittner, Thomas L.

(57) **Zusammenfassung**

Die Erfindung betrifft ein Trainingsgerät (1) zum Simulieren einer Ruderbewegung mit einer Widerstandseinrichtung (8), die eingerichtet ist, einer von einem Nutzer eingeleiteten Zugbewegung einen Widerstand entgegenzusetzen und zum Bereitstellen des Widerstands eine Anordnung mit einem Schwungrad (9) und einem dem Schwungrad zugeordneten Magnetelement (10) aufweist, mit denen eine Wirbelstrombremseinrichtung (11) gebildet ist; einer Einstelleinrichtung, die eingerichtet ist, zum Einstellen der Wirbelstrombremseinrichtung (11) eine Relativstellung zwischen dem Schwungrad (9) und dem Magnetelement (10) einzustellen, wobei das Magnetelement (10) einen ersten Magnetelementabschnitt und einen zweiten Magnetelementabschnitt aufweist, die voneinander beabstandet sind, derart, dass in Blickrichtung parallel zum Schwungrad (9) das Schwungrad (9) zwischen dem ersten Magnetelementabschnitt und dem zweiten Magnetelementabschnitt angeordnet ist; und einer Steuereinrichtung (13), die eingerichtet ist, als Reaktion auf das Empfangen von Eingangssignalen Steuersignale bereitzustellen und an die Einstelleinrichtung (12) auszugeben, derart, dass die Einstelleinrichtung (12) auf den Empfang der Steuersignale die Relativstellung zwischen dem Schwungrad (9) und dem Magnetelement (10) in Echtzeit den Steuersignalen entsprechend einstellt. Weiterhin ist ein Verfahren zum Betreiben eines Trainingsgeräts (1) vorgesehen. (Fig. 2)

## Beschreibung

Die Erfindung betrifft ein Trainingsgerät und ein Verfahren zum Simulieren einer Ruderbewegung.

### Hintergrund

Trainingsgeräte zum Simulieren einer Ruderbewegung werden allgemein als Ruderergometer bezeichnet.

Ziel bei einem sogenannten Ergometerrudern bzw. bei der Simulation einer Ruderbewegung ist es, dass Bewegungs- und Momentabläufe mit dem Rudern in realen Ruderbooten übereinstimmen. Diesbezügliche Einstellungen im Ruderboot, zum Beispiel die Stemmbrettposition, sind im Ruderergometer ohne Weiteres übertragbar. Das Durchzugsgefühl bei der Simulation der Ruderbewegung unterscheidet sich in bekannten Ruderergometern jedoch stark voneinander und ist wesentlich von der bereitgestellten Widerstandseinrichtung des Ruderergometers abhängig.

Der vom Ruderer zu überwindende und im Folgenden so bezeichnete (Trainings)Widerstand wird in bekannten Ruderergometern z. B. durch eine Widerstandseinrichtungen mit Widerstandsmechanismen wie Schwungmassen, mechanischen Bremsen oder elektromechanischen Antrieben mittels Momentabgabe erzeugt, welche der Zugbewegung des oder der Trainierenden entgegenwirkt. Hierbei wird angestrebt, Widerstandseinrichtungen bereitzustellen, deren Funktion es ist, ein realistisches Durchzugsgefühl gleich dem realen Einzel- und dem Mannschaftsrudern zu ermöglichen.

Im Allgemeinen ist der (Trainings)Widerstand in bekannten Ruderergometern jedoch durch einen den Widerstandsmechanismus charakterisierenden Widerstandsverlauf gekennzeichnet, der von einem realen Widerstandsverlauf bei realem Rudern abweicht.

Trainingsgeräte, die zur Simulation der Ruderbewegung den Widerstand einer Widerstandseinrichtung variieren, werden in den Dokumenten CA 2 723 332 A1, DE 10 2004 051 806 A1 und WO 2004 / 026 412 A1 offenbart.

Nach EP 3 322 492 A1 ist ein Verfahren bekannt, um Ruderern beim Training auf dem Land durch die Simulierung von Bewegungen und wirkendenden Kräften eines realen Boots wirklichkeitsnahe Bewegungs- und Kraftabläufe, insbesondere beim Mannschaftsrudern, zu vermitteln. Dabei wird vorgeschlagen, konkrete Fehler in der Rudertechnik am Ruderergometer oder am Ruderer durch zu messende Parameter als Daten zu erfassen, zu verarbeiten und zu speichern. Ferner wird vorgeschlagen, Korrekturgrößen zu berechnen und diese als Regelungsgrößen mittels einer Regelungseinrichtung zur stufenlosen Widerstandsänderung in ein Dämpfungssystem einzugeben, wobei damit ein in Ruderergometer integrierbares Regelungssystem für das Training auf dem Land geschaffen wird.

In Dokument EP 3 322 492 A1 wird der Widerstand der Widerstandseinrichtungen über ein Getriebe variiert.

### Zusammenfassung

Aufgabe der Erfindung ist es, ein Trainingsgerät und ein Verfahren zum Simulieren einer Ruderbewegung bereitzustellen, mit denen der Trainingswiderstand flexibel einstellbar ist.

Zur Lösung sind ein Trainingsgerät und ein Verfahren zum Simulieren einer Ruderbewegung nach den unabhängigen Ansprüchen 1 und 11 geschaffen. Ausgestaltungen sind Gegenstand abhängiger Unteransprüche.

Nach einem Aspekt ist ein Trainingsgerät zum Simulieren einer Ruderbewegung geschaffen. Das Trainingsgerät weist Folgendes auf: einen Rollsitz, der auf einer Führung linear vor und zurück bewegbar ist, ein Stemmbrett, das im Bereich eines Endes der Führung angeordnet ist, eine Griffeinrichtung, eine Kraftübertragungseinrichtung, die mit der Griffeinrichtung verbunden ist, und einer Widerstandseinrichtung, die mit der Kraftübertragungseinrichtung verbunden ist. Dabei ist die Widerstandseinrichtung eingerichtet, einer von einem Nutzer über die Griffeinrichtung und die Kraftübertragungseinrichtung eingeleiteten Zugbewegung einen Widerstand entgegenzusetzen. Außerdem weist die Widerstandseinrichtung zum Bereitstellen des Widerstands eine Anordnung mit einem Schwungrad und einem dem Schwungrad zugeordneten Magnetelement auf, mit denen eine Wirbelstrombremseinrichtung gebildet ist. Ferner weist das Trainingsgerät eine Einstelleinrichtung auf, die der Widerstandseinrichtung zugeordnet und eingerichtet ist, zum Einstellen der Wirbelstrombremseinrichtung (insbesondere zum Einstellen des durch die Wirbelstrombremseinrichtung erzeugten Widerstands) eine Relativstellung zwischen dem Schwungrad und dem Magnetelement einzustellen. Hierbei weist das Magnetelement einen ersten Magnetelementabschnitt und einen zweiten Magnetelementabschnitt auf, die voneinander beabstandet sind, derart, dass in Blickrichtung parallel zum Schwungrad das Schwungrad zwischen dem ersten Magnetelementabschnitt und dem zweiten Magnetelementabschnitt angeordnet ist. Darüber hinaus weist das Trainingsgerät eine Steuereinrichtung auf, die mit der Einstelleinrichtung verbunden und eingerichtet ist, als Reaktion auf das Empfangen von Eingangssignalen über einen Signaleingang der Steuereinrichtung Steuersignale bereitzustellen und über einen Signalausgang der Steuereinrichtung an die Einstelleinrichtung auszugeben, derart, dass die Einstelleinrichtung auf den Empfang der Steuersignale die Relativstellung zwischen dem Schwungrad und dem Magnetelement in Echtzeit den Steuersignalen entsprechend einstellt.

Nach einem weiteren Aspekt ist ein Verfahren zum Betreiben eines Trainingsgeräts zum Simulieren einer Ruderbewegung geschaffen. Das Trainingsgerät weist Folgendes auf: einen Rollsitz, der auf einer Führung linear vor und zurück bewegbar ist, ein Stemmbrett, das im Bereich eines Endes der Führung angeordnet ist, eine Griffeinrichtung, eine Kraftübertragungseinrichtung, die mit der Griffeinrichtung verbunden ist, eine Widerstandseinrichtung, die mit der Kraftübertragungseinrichtung verbunden und zum Bereitstellen einer Widerstandskraft eine Anordnung mit einem Schwungrad und einem dem Schwungrad zugeordneten Magnetelement aufweist, mit denen eine Wirbelstrombremseinrichtung gebildet ist, und eine Einstelleinrichtung, die der Widerstandseinrichtung zugeordnet und eingerichtet ist, zum Einstellen der Wirbelstrombremseinrichtung (insbesondere zum Einstellen des durch die Wirbelstrombremseinrichtung erzeugten Widerstands) eine Relativstellung zwischen dem Schwungrad und dem Magnetelement einzustellen. Hierbei weist das Magnetelement einen ersten Magnetelementabschnitt und einen zweiten Magnetelementabschnitt auf, die voneinander beabstandet sind, derart, dass in Blickrichtung parallel zum Schwungrad das Schwungrad zwischen dem ersten Magnetelementabschnitt und dem zweiten Magnetelementabschnitt angeordnet ist. Darüber hinaus weist das Trainingsgerät eine Steuereinrichtung auf, die mit der Einstelleinrichtung verbunden ist. Das Verfahren umfasst Folgendes: Bereitstellen einer ersten Widerstandskraft, die einer von einem Nutzer über die Griffeinrichtung und die Kraftübertragungseinrichtung eingeleiteten Zugbewegung entgegenwirkt, Empfangen von Eingangssignalen über einen Signaleingang in der Steuereinrichtung, Bereitstellen von Steuersignalen als Reaktion auf das Empfangen der Eingangssignale in der Steuereinrichtung, Ausgeben der Steuersignale über einen Signalausgang der Steuereinrichtung an die Einstelleinrichtung und Einstellen der Relativstellung zwischen dem Schwungrad und dem Magnetelement in Echtzeit den Steuersignalen entsprechend mittels der Einstelleinrichtung, derart, dass eine zweite Widerstandskraft bereitgestellt wird, die von der ersten Widerstandskraft verschieden ist und der von dem Nutzer über die Griffeinrichtung und die Kraftübertragungseinrichtung eingeleiteten Zugbewegung entgegenwirkt.

Im vorliegenden Zusammenhang bezieht sich die Formulierung *"real"* auf Vorgänge oder Größen betreffend das tatsächliche Rudern auf dem Wasser in einem Ruderboot. Insbesondere das *"reale Rudern"* steht für das tatsächliche Rudern im Boot auf dem Wasser. Demgegenüber betreffen *"simulierte"* Vorgänge oder Größen das rekonstruierte Rudern auf dem Trainingsgerät.

Die Kraftübertragungseinrichtung kann eingerichtet sein, eine Kraft (insbesondere eine Zugkraft), mit der der Nutzer an der Griffeinrichtung zieht, an das Widerstandselement weiterzuleiten. Die Kraftübertragungseinrichtung kann ein Zugmitteltrieb sein. Bei einem Zugmitteltrieb wird zur Bewegungs- bzw. Kraftübertragung zwischen voneinander weit entfernten Getriebe-Gliedern ein Zugmittel verwendet, das zumindest eines der Glieder umschlingt.

Ein (Gesamt)Widerstand der Widerstandseinrichtung kann die Trägheit des Schwungrads und den Widerstand der Wirbelstrombremse umfassen. Der Abstand zwischen dem Schwungrad und dem zugeordneten Magnetelement kann indikativ für den Widerstand der Wirbelstrombremse sein. Ein Überlappungsbereich zwischen Magnetelement und Schwungrad (insbesondere in Blickrichtung senkrecht zum Schwungrad) kann indikativ für den Widerstand der Wirbelstrombremse sein. Die Größe eines von einem dem Magnetelement zugeordneten Magnetfeld durchdrungenen Bereichs des Schwungrads kann indikativ für den Widerstand der Wirbelstrombremse sein. Zusätzlich können Reibungseffekte (z. B. durch die Lagerung des Schwungrads oder durch den auf das rotierende Schwungrad einwirkenden Luftwiderstand) Einfluss auf den Gesamtwiderstand haben. Die Einstellung der Relativstellung zwischen dem Schwungrad und dem Magnetelement kann den Gesamtwiderstand der Widerstandseinrichtung einstellen.

Es kann ein Sollwiderstand bereitgestellt sein. Die Steuereinrichtung kann eingerichtet sein, als Reaktion auf das Empfangen von Eingangssignalen den Sollwiderstand zu bestimmen. Die Steuereinrichtung kann Steuersignale an die Einstelleinrichtung geben, sodass die Einstelleinrichtung auf den Empfang der Steuersignale die Relativstellung zwischen dem Schwungrad und dem Magnetelement in Echtzeit den Steuersignalen entsprechend einstellt, derart, dass der Widerstand der Widerstandseinrichtung an den Sollwiderstand angeglichen wird. Der Sollwiderstand kann einem realen Trainingswiderstand während realem Rudern entsprechen. Der reale Trainingswiderstand kann beispielsweise aus den Eingangssignalen ermittelt werden.

Das Magnetelement kann einen Permanentmagneten und / oder einen Elektromagneten aufweisen.

Die Relativstellung zwischen dem Schwungrad und dem Magnetelement kann während der Ruderbewegung einen Relativstellungsverlauf aufweisen (z. B. in Abhängigkeit der Phase der Ruderbewegung). Der Relativstellungsverlauf kann zumindest zwei Relativstellungen zwischen dem Schwungrad und dem Magnetelement umfassen.

Die Blickrichtung senkrecht zum Schwungrad kann insbesondere eine Blickrichtung sein, die parallel zur Rotationsachse des Schwungrads angeordnet ist, insbesondere parallel zu einer in Bezug auf die Rotationsachse des Schwungrads axiale Richtung des Schwungrads. Die Blickrichtung parallel zum Schwungrad kann eine Blickrichtung sein, die senkrecht zur Blickrichtung senkrecht zum Schwungrad angeordnet ist. Die Blickrichtung parallel zum Schwungrad kann eine Blickrichtung sein, die parallel zu einer kreisförmigen Oberflächenseite des Schwungrads ausgerichtet ist. Die Blickrichtung parallel zum Schwungrad kann insbesondere eine Blickrichtung sein, die parallel zu einer in Bezug auf die Rotationsachse des Schwungrads radiale Richtung des Schwungrads angeordnet ist. Die vorstehenden Ausführungen gelten entsprechend für die allgemeinen Formulierungen *"parallel zum Schwungrad'* und *"senkrecht zum Schwungrad".*

Eine Einstellung / Verstellung in *"Echtzeit",* kann einer Einstellung / Verstellung entsprechen, die innerhalb der Zeitdauer des Ruderschlages (ca. 1 bis 4 Sekunden) stattfindet, bevorzugt innerhalb der Zeitdauer der Erholungsphase (ca. 2/3 bis 8/3 Sekunden), weiter bevorzugt innerhalb der Zeitdauer der Zugphase (ca. 1/3 bis 4/3 Sekunden) und insbesondere innerhalb von Millisekunden.

Das Magnetelement kann zum Einstellen der Relativstellung zwischen dem Schwungrad und dem Magnetelement parallel zum Schwungrad verlagerbar sein. Das Magnetelement kann zum Einstellen der Relativstellung zwischen dem Schwungrad und dem Magnetelement in einer Ebene parallel zum Schwungrad verlagerbar sein. Das Magnetelement kann zum Einstellen der Relativstellung zwischen dem Schwungrad und dem Magnetelement entlang eines Kreisbogens parallel zum Schwungrad verlagerbar sein.

Der erste Magnetelementabschnitt und der zweite Magnetelementabschnitt können einander gegenüberliegen und / oder durch ein Zwischenelement voneinander beabstandet sein. Der erste und der zweite Magnetelementabschnitt können baugleich sein. Der erste und / oder der zweite Magnetelementabschnitt können einen, zwei, drei oder mehrere Magneteinheiten aufweisen. Eine Magneteinheit kann ein Permanentmagnet oder ein Elektromagnet sein. Der zweite Magnetelementabschnitt kann derart gestaltet sein, dass er eine Spiegelung des ersten Magnetelementabschnitts an der Schwungradmittelebene darstellt. Der erste und der zweite Magnetelementabschnitt können so angeordnet sein, dass sich zwischen ihnen ein Magnetfeld, insbesondere ein im Wesentlichen homogenes Magnetfeld, ausbildet. Der erste und der zweite Magnetelementabschnitt können so angeordnet sein, dass die Pole zueinander gerichtet sind, insbesondere derart, dass ein Südpol und ein Nordpol zueinander gerichtet sind. Zwischen dem ersten und zweiten Magnetelementabschnitt kann ein Zwischenraum bereitgestellt sein. Der Zwischenraum kann (im Wesentlichen) frei von dem Zwischenelement sein. Insbesondere kann das Zwischenelement um den Zwischenraum herum führen. Das Zwischenelement kann den ersten und zweiten Magnetelementabschnitt miteinander verbinden. Das Zwischenelement kann sowohl den ersten als auch den zweiten Magnetelementabschnitt kontaktieren. Das Zwischenelement kann paramagnetisch sein, bevorzugt ferromagnetisch. Das Zwischenelement kann die magnetischen Feldlinien der sich abgewandten Pole der Magnetelementabschnitte zusammenführen und / oder diese umfassen. Der Raum, in dem das homogene Magnetfeld vorliegt, kann der Zwischenraum sein.

Das Magnetelement kann als Hufeisenmagnetelement gebildet sein. Das Hufeisenmagnetelement kann ein Hufeisenmagnet bilden. Das Hufeisenmagnetelement kann den ersten und den zweiten Magnetelementabschnitt sowie das Zwischenelement umfassen. Insbesondere können der erste und der zweite Magnetelementabschnitt sowie das Zwischenelement das Hufeisenmagnetelement bilden.

Das Magnetelement kann zum Einstellen der Relativstellung zwischen dem Schwungrad und dem Magnetelement derart verlagerbar sein, dass eine abschnittsweise überlappungsfreie Relativstellung einstellbar ist, bei der in Blickrichtung senkrecht zum Schwungrad das Schwungrad und das Magnetelement zumindest abschnittsweise überlappungsfrei sind. Die abschnittsweise überlappungsfreie Relativstellung kann alternativ oder zusätzlich dergestalt sein, dass bei Blickrichtung senkrecht zum Schwungrad das Schwungrad und der erste Magnetelementabschnitt und / oder das Schwungrad und der zweite Magnetelementabschnitt zumindest abschnittsweise überlappungsfrei sind. Das Magnetelement kann über den äußeren Rand des Schwungrads hinaus verlagerbar sein. Entsprechend kann auch vollständige Überlappungsfreiheit einstellbar sein. Das Magnetelement zum Einstellen der Relativstellung zwischen dem Schwungrad und dem Magnetelement kann derart verlagerbar sein, dass der Bereich des Magnetfelds, der in das Schwungrad eindringt, (größen)variierbar ist.

Der Überlappungsbereich zwischen Zwischenraum und Schwungrad kann so variierbar sein. Je größer der Überlappungsbereich von Zwischenraum ((homogenem) Magnetfeld) und Schwungrad ist, desto größer kann die Bremskraft und / oder der Widerstand sein.

Das Magnetelement kann zum Einstellen der Relativstellung zwischen dem Schwungrad und dem Magnetelement um eine Magnetelementrotationsachse rotierbar sein. Die Einstellung des Rotationswinkels des Magnetelements um die Magnetelementrotationsachse kann indikativ für die Einstellung der Relativstellung sein. Die Magnetelementrotationsachse kann parallel zu der Rotationsachse des Schwungrads angeordnet sein.

Das Magnetelement kann eingerichtet sein, dass eine beim Bereitstellen des Widerstands auf das Magnetelement wirkende Kraft für mehrere verschiedene Relativstellungen zwischen dem Schwungrad und dem Magnetelement im Wesentlichen durch die Magnetelementrotationsachse verläuft, insbesondere derart, dass auf das Magnetelement kein Drehmoment wirkt.

Das Magnetelement kann (im Wesentlichen) momentenfrei sein. Das Magnetelement kann zwischen mehreren verschiedenen Relativstellungen zwischen dem Schwungrad und dem Magnetelement (im Betrieb) im Wesentlichen kräftefrei verlagerbar sein, insbesondere bei Rotation des Schwungrads und / oder bei Bereitstellung eines Widerstands (eines Widerstands > 0) während der Verlagerung.

Insbesondere kann das Magnetelement in eine erste Relativstellung anordenbar sein, bei der auf das Magnetelement beim Bereitstellen eines ersten Widerstands kein oder im Wesentlichen kein (Dreh-)Moment wirkt. Zur Bereitstellung des ersten Widerstands können das Magnetelement und das sich mit einer bestimmten Winkelgeschwindigkeit drehende Schwungrad in Blickrichtung senkrecht zum Schwungrad einen ersten Überlappungsbereich bilden. Bei der Bereitstellung des ersten Widerstands kann eine erste resultierende Kraft auf das Magnetelement wirken. Die erste resultierende Kraft kann (im Wesentlichen) durch die Magnetelementrotationsachse verlaufen, derart, dass aus der ersten resultierenden Kraft (im Wesentlichen) kein Moment resultiert, das auf das Magnetelement wirkt. Außerdem kann das Magnetelement in eine zweite Relativstellung anordenbar sein, bei der auf das Magnetelement beim Bereitstellen eines zweiten Widerstands kein oder im Wesentlichen kein (Dreh)Moment wirkt. Zur Bereitstellung des zweiten Widerstands können das Magnetelement und das sich mit einer bestimmten Winkelgeschwindigkeit drehende Schwungrad in Blickrichtung senkrecht zum Schwungrad einen zweiten Überlappungsbereich bilden (der vom ersten Überlappungsbereich verschieden sein kann). Bei der Bereitstellung des zweiten Widerstands kann eine zweite resultierende Kraft auf das Magnetelement wirken. Die zweite resultierende Kraft kann (im Wesentlichen) durch die Magnetelementrotationsachse verlaufen, derart, dass aus der zweiten resultierenden Kraft (im Wesentlichen) kein Moment resultiert, das auf das Magnetelement wirkt. Die erste und die zweite resultierende Kraft können richtungsverschieden sein. Der Angriffspunkt der ersten resultierenden Kraft kann der Flächenschwerpunkt des ersten Überlappungsbereichs sein. Der Angriffspunkt der zweiten resultierenden Kraft kann der Flächenschwerpunkt des zweiten Überlappungsbereichs sein. Der Angriffspunkt der ersten resultierenden Kraft und der Angriffspunkt der zweiten resultierenden Kraft können voneinander verschieden sein.

Das Magnetelement kann zum Einstellen der Relativstellung zwischen dem Schwungrad und dem Magnetelement über ein selbsthemmendes Getriebe verlagerbar sein. Das selbsthemmende Getriebe kann potenzielle auf das Magnetelement wirkende Momente abfangen bzw. diesen entgegenstehen. Das selbsthemmende Getriebe kann ein Schneckengetriebe sein.

Die Griffeinrichtung kann im Wesentlichen parallel zu der Führung vor und zurück bewegbar sein. In einer bevorzugten Ausführungsform kann die Griffeinrichtung einen einzelnen Griff umfassen, der so eingerichtet ist, dass der Nutzer während der Zugbewegung beidhändig an diesem Griff ziehen kann. Die Kraft, mit der der Nutzer an dem Griff zieht, kann mit einer Kraftübertragungseinrichtung an eine einzelne Widerstandseinrichtung übertragen werden. Die Rotationsachse des Schwungrads der Widerstandseinrichtung kann bevorzugt horizontal ausgerichtet sein. Insbesondere kann die Rotationsebne des Schwungrads parallel zur Führung angeordnet sein.

Das Magnetelement, insbesondere zumindest eines der Magnetelementabschnitte, kann zum Einstellen der Relativstellung zwischen dem Schwungrad und dem Magnetelement in Bezug auf eine Rotationsachse des Schwungrads in axialer Richtung verlagerbar sein. Mit dem Magnetelement, insbesondere zumindest einem der Magnetelementabschnitte, das / der in Bezug auf eine Rotationsachse des Schwungrads in axialer Richtung verlagerbar ist, kann der Abstand zwischen der Rotationsebene des Schwungrads und dem Magnetelement, insbesondere zumindest einem der Magnetelementabschnitte, variabel sein. Das Magnetelement, z. B. zumindest eines der Magnetelementabschnitte, kann insbesondere parallel zur Rotationsachse des Schwungrads verlagerbar sein. Das Magnetelement, z. B. zumindest eines der Magnetelementabschnitte, kann in Bezug auf eine Rotationsachse des Schwungrads in axialer Richtung verlagerbar sein, derart, dass das Magnetelement, z. B. zumindest eines der Magnetelementabschnitte, und das Schwungrad in unmittelbaren Kontakt gebracht werden können. Im Folgenden kann eine Verlagerung des Magnetelements eine entsprechende Verlagerung zumindest eines der Magnetelementabschnitte des Magnetelements darstellen. Im Betrieb können das Magnetelement und das Schwungrad kontaktfrei sein.

Das Magnetelement zum Einstellen der Relativstellung zwischen dem Schwungrad und dem Magnetelement kann in Bezug auf eine Rotationsachse des Schwungrads in radialer Richtung verlagerbar sein. Mit dem Magnetelement, das in Bezug auf eine Rotationsachse des Schwungrads in radialer Richtung verlagerbar ist, kann der Abstand zwischen der Rotationsachse des Schwungrads und dem Magnetelement eingestellt werden. Das Magnetelement kann beispielsweise auf einer Ebene parallel zur Rotationsebene des Schwungrads verlagerbar sein. Das Magnetelement kann insbesondere parallel zu einer Linie senkrecht zur Rotationsachse des Schwungrads verlagerbar sein.

Alternativ kann das Magnetelement sowohl in Bezug auf eine Rotationsachse des Schwungrads in axialer Richtung als auch in radialer Richtung verlagerbar sein. Der Abstand des Magnetelements kann in Bezug auf den Massenschwerpunkt des Schwungrads variabel sein.

Die Steuereinrichtung kann mit einer Sensoreinrichtung verbunden und eingerichtet sein, im Betrieb als Eingangssignale über den Signaleingang Sensorsignale von der Sensoreinrichtung zu empfangen, wobei die Sensorsignale wenigstens einen Betriebsparameter anzeigen.

Die Sensoreinrichtung kann einen Rotationsgeschwindigkeitssensor umfassen. Ferner kann die Sensoreinrichtung einen Griffpositionssensor umfassen. Zusätzlich kann die Sensoreinrichtung einen oder mehrere Gewichtssensoren, einen Rollsitzpositionssensor und einen Zugkraftsensor umfassen.

Die Sensorsignale, insbesondere die Sensorsignale des Rotationsgeschwindigkeitssensors, können z. B. die Rotationsgeschwindigkeit des Schwungrads anzeigen. Die Sensorsignale, insbesondere die Sensorsignale des Griffpositionssensors, können die Position der Griffeinrichtung anzeigen. Zusätzlich können die Sensorsignale, insbesondere die Sensorsignale des einen oder der mehreren Gewichtssensoren, des Rollsitzpositionssensors und des Zugkraftsensors, die Masse des Nutzers, die Position des Massenzentrums des Nutzers, die Position des Rollsitzes, die Geschwindigkeit des Rollsitzes und / oder die Zugkraft des Nutzers anzeigen.

Die Steuereinrichtung kann Steuersignale insbesondere in Abhängigkeit (proportional oder in funktionaler Abhängigkeit) der Sensorsignale bereitstellen und über einen Signalausgang der Steuereinrichtung an die Einstelleinrichtung ausgeben, derart, dass die Einstelleinrichtung auf den Empfang der Steuersignale die Relativstellung zwischen dem Schwungrad und dem Magnetelement in Echtzeit den Steuersignalen entsprechend einstellt, insbesondre den Sensorsignalen entsprechend.

Ferner können Sensorsignale bereitgestellt sein, die die Position der Griffeinrichtung anzeigen. Solche Sensorsingale werden im Folgenden als Griffpositionssignale bezeichnet. Während des Betriebs des Trainingsgeräts wird die Griffeinrichtung vor und zurück bewegt. Über die Griffpositionssignale kann während des Betriebs des Trainingsgeräts bestimmt werden, ob die Griffeinrichtung vor oder zurück bewegt wird (Vor- oder Zurück-Bewegung). Als Reaktion auf die Bestimmung, ob die Griffeinrichtung vor oder zurück bewegt wird, kann die Ruderbewegung in zwei Phasen eingeteilt werden (insbesondere in die zwei Phasen: Zugphase bzw. Zugbewegung und Erholungsphase bzw. Anrollen in die Auslageposition). Die Auslageposition ist der Ausgangspunkt der Zugphase. Die Rücklageposition ist der Endpunkt der Zugphase. Z. B. kann im Falle dessen, dass mittels der Griffpositionssignale bestimmt wird, dass die Griffeinrichtung zurück bewegt wird, die Zugphase und im Falle dessen, dass mittels der Griffpositionssignale bestimmt wird, dass die Griffeinrichtung vor bewegt wird, die Erholungsphase ermittelt werden. Insbesondere kann das Bestimmen der Vor-Bewegung die Erholungsphase anzeigen und das Bestimmen der Zurück-Bewegung die Zugphase anzeigen. Gleiches gilt je nach Definition der Vor- bzw. Zurück-Bewegung auch umgekehrt. Z. B. kann im Falle dessen, dass mittels der Griffpositionssignale bestimmt wird, dass die Griffeinrichtung zurück bewegt wird, die Erholungsphase und im Falle dessen, dass mittels der Griffpositionssignale bestimmt wird, dass die Griffeinrichtung vor bewegt wird, die Zugphase ermittelt werden. Insbesondere kann das Bestimmen der Vor-Bewegung die Zugphase anzeigen und das Bestimmen der Zurück-Bewegung die Erholungsphase anzeigen. Es kann vorgesehen sein, dass die Einstelleinrichtung die Relativstellung zwischen dem Schwungrad und dem Magnetelement in Echtzeit den Sensorsignalen entsprechend einstellt, insbesondre in Abhängigkeit der Phase der Ruderbewegung.

Es kann vorgesehen sein, dass die Einstelleinrichtung die Relativstellung zwischen dem Schwungrad und dem Magnetelement derart einstellt, dass das Magnetelement eine erste Relativstellung aufweist.

Ferner kann vorgesehen sein, dass die Einstelleinrichtung die Relativstellung zwischen dem Schwungrad und dem Magnetelement derart einstellt, dass das Magnetelement eine zweite Relativstellung aufweist. Die erste und die zweite Relativstellung können voneinander verschieden sein.

Die erste Relativstellung kann während der Erholungsphase oder der Zugphase eingestellt sein und die zweite Relativstellung kann während der Zugphase oder der Erholungsphase eingestellt sein.

Beispielsweise kann das Magnetelement während der Erholungsphase in der Nähe des Schwungrads sein (sodass das Schwungrad über einen induzierten Wirbelstrom gebremst wird) und während der Zugphase fern dem Schwungrad sein (sodass das Schwungrad weniger über einen induzierten Wirbelstrom gebremst wird). Alternativ kann das Magnetelement während der Erholungsphase fern dem Schwungrad sein und während der Zugphase in der Nähe des Schwungrads sein. Bei einem kleinen Abstand (Nähe) zwischen Magnetelement und Schwungrad kann der Abstand zwischen einem der beiden Magnetelementabschnitte und dem Schwungrad klein sein. Alternativ können bei einem kleinen Abstand (Nähe) zwischen Magnetelement und Schwungrad die Abstände zwischen beiden Magnetelementabschnitten und dem Schwungrad klein sein. Entsprechendes gilt sinngemäß für einen großen Abstand (Ferne).

Alternativ oder ergänzend kann der Überlappungsbereich bei Blickrichtung senkrecht zum Schwungrad zwischen Magnetelement und Schwungrad während der Erholungsphase groß sein (sodass das Schwungrad über einen induzierten Wirbelstrom gebremst wird) und während der Zugphase klein sein (sodass das Schwungrad weniger über einen induzierten Wirbelstrom gebremst wird). Alternativ kann der Überlappungsbereich während der Erholungsphase klein sein und während der Zugphase groß sein.

Des Weiteren können Sensorsignale des Rotationsgeschwindigkeitssensors bereitgestellt sein, die die Rotationsgeschwindigkeit des Schwungrads anzeigen. Solche Sensorsingale werden im Folgenden als Rotationsgeschwindigkeitssignale bezeichnet. Die Steuereinrichtung kann eingerichtet sein, als Reaktion auf das Empfangen der Rotationsgeschwindigkeitssignale mittels der Einstelleinrichtung die Relativstellung zwischen dem Schwungrad und dem Magnetelement den Rotationsgeschwindigkeitssignalen entsprechend einzustellen. Der Widerstand der Widerstandseinrichtung kann als Reaktion auf das Empfangen der Rotationsgeschwindigkeitssignale beispielsweise an den Sollwiderstand angeglichen werden.

Der Sollwiderstand kann aus Sensorsignalen ermittelt werden. Insbesondere kann der Sollwiderstand aus der jeweils vorliegenden Phase der Ruderbewegung ermittelt werden.

In einer beispielhaften Ausführungsform, kann mittels dem Trainingsgerät das Rudern in einem bestimmten Boot (Einer, Zweier, Vierer, Achter oder Ruderboot mit drei, fünf, sechs, sieben oder mehr als acht Ruderern, wobei das Boot ein Gig- oder ein Rennboot und sowohl ein Riemen- als auch ein Skullboot sein kann) simuliert werden. Entsprechend kann der Widerstand des Trainingsgeräts an Widerstandsverläufe beim realen Rudern in dem bestimmten Boot angeglichen werden.

Die Widerstandsverläufe beim realen Rudern, insbesondere die Widerstandsverläufe während einer realen Zugphase, hängen von einer Vielzahl von Parametern (Bootsgeschwindigkeit, d. h. vor allem der Rudertechnik und der Zugkraft, Gewicht des Ruderers, etc.) ab. Damit das Trainingsgerät die Ruderbewegung, d. h. insbesondere den Widerstandsverlauf während der Zugphase, realitätsnah simulieren kann, können diese Parameter über die Sensoreinrichtung bestimmt bzw. abgeschätzt werden. Als Reaktion auf das Bestimmen bzw. Abschätzen dieser Parameter kann die Relativstellung zwischen dem Schwungrad und dem Magnetelement mittels Steuersignalen und entsprechend der Widerstand der Widerstandseinrichtung des Trainingsgeräts eingestellt werden, derart, dass der Widerstand des Trainingsgeräts an den Widerstand bei realem Rudern bei Vorliegen dieser Parameter angeglichen wird.

Die Steuereinrichtung kann mit einer Eingabeeinrichtung einer Benutzerschnittstelle verbunden und eingerichtet sein, als Eingangssignale über den Signaleingang Benutzereingabesignale von der Eingabeeinrichtung der Benutzerschnittstelle zu empfangen.

Die Eingabeeinrichtung kann beispielsweise einen Touchscreen, einen Knopf, einen Joystick und / oder eine Spracherkennungseinrichtung umfassen. Es kann beispielsweise vorgesehen sein, dass ein Anzeigeelement, welches grafische Darstellungen bereitstellt, die zumindest einen Betriebsparameter anzeigen, bereitgestellt ist. Das Anzeigeelement kann die Eingabeeinrichtung umfassen.

Beispielweise kann vorgesehen sein, dass der Benutzer einen bestimmten Sollwiderstand oder einen bestimmten Verlauf des Sollwiderstands während einer jeden Ruderbewegungswiederholung auswählen kann. Der Sollwiderstand kann aus der Benutzereingabe und den Sensorsignalen ermittelt werden.

Ein Verlauf einer bestimmten Größe kann die Variation der bestimmten Größe während des Ruderschlages definieren.

Ferner kann vorgesehen sein, dass der Benutzer z. B. äußere Parameter wie Bootstyp, Art der Ruder (Riemen oder Skulls sowie Blattform), Strömung, Wind, Gewicht des Ruderers oder der Ruderer (Mannschaftsboot) über die Benutzerschnittstelle eingeben kann. Als Reaktion auf die Benutzereingabe können Speicherdaten aus einer Speichereinrichtung ausgewählt und bereitgestellt werden.

Des Weiteren kann vorgesehen sein, dass der Benutzer über die Benutzerschnittstelle gespeicherte Trainingsszenarien auswählen kann. Ein beispielhaftes Trainingsszenario kann Intervalltraining sein, d. h. es wird z. B. für ein bestimmtes erstes Zeitintervall ein erster Sollwiderstandsverlauf an der Widerstandseinrichtung bereitgestellt und anschließend für ein zweites Zeitfenster ein zweiter Sollwiderstandsverlauf an der Widerstandseinrichtung bereitgestellt, der sich vom ersten Sollwiderstandsverlauf unterscheidet.

Die Einstelleinrichtung kann eingerichtet sein, die Relativstellung zwischen dem Schwungrad und dem Magnetelement während der Bewegung, insbesondere der Zugbewegung, des Nutzers zu ändern. Ferner kann die Einstelleinrichtung eingerichtet sein, die Relativstellung zwischen dem Schwungrad und dem Magnetelement während der Erholungsphase des Nutzers zu ändern.

Die Relativstellung zwischen dem Schwungrad und dem Magnetelement kann während der Zugbewegung und / oder der Erholungsphase des Nutzers in einer vorbestimmten Weise (Relativstellungsverlauf) geändert werden. Die Änderung der Relativstellung kann von Sensordaten abhängig sein.

Bei realem Rudern sind die Widerstandsverläufe während einer jeweiligen Zugbewegung insbesondre von der Bootsgeschwindigkeit, d. h. vor allem der Rudertechnik und der Zugkraft, aber auch anderen Parametern abhängig und können während der Zugphase variieren. Diese Parameter können über die Sensordaten ermittelt werden. Über die Sensordaten können beispielsweise die Bootsgeschwindigkeit, insbesondere die Rudertechnik und die Zugkraft, bestimmt werden. Damit Widerstandsverläufe während der Zugphase des Trainingsgeräts realitätsnah sind, kann der Widerstand des Trainingsgeräts über Variation der Relativstellung zwischen dem Schwungrad und dem Magnetelement während der Zugbewegung eingestellt werden. Die Variation der Relativstellung zwischen dem Schwungrad und dem Magnetelement kann insbesondere in Abhängigkeit von Sensordaten eingestellt werden.

Die Relativstellung während der Zugbewegung (der Relativstellungsverlauf in der Zugbewegung) kann sich von der Relativstellung während der Erholungsphase (dem Relativstellungsverlauf in der Erholungsphase) unterscheiden. Der Relativstellungsverlauf / die Relativstellung während der Zugbewegung und / oder der Relativstellungsverlauf / die Relativstellung während der Erholungsphase kann insbesondere von der Griffposition abhängig sein. Zusätzlich oder alternativ kann der Relativstellungsverlauf / die Relativstellung während der Zugbewegung und / oder der Relativstellungsverlauf / die Relativstellung während der Erholungsphase von der Rotationsgeschwindigkeit des Schwungrads abhängen.

Die Relativstellung am Anfang der Zugbewegung kann sich von der Relativstellung am Ende der Zugbewegung unterscheiden.

Die Einstelleinrichtung kann einen Schrittmotor aufweisen, der eingerichtet ist, als Reaktion auf die Steuersignale die Relativstellung zwischen dem Schwungrad und dem Magnetelement einzustellen. Insbesondere kann die Einstelleinrichtung einen Motor (Schrittmotor) aufweisen, der eingerichtet ist, über ein (zwischengeschaltetes) selbsthemmendes Getriebe die Relativstellung zwischen dem Schwungrad und dem Magnetelement einzustellen.

Der Motor (Schrittmotor) kann eingerichtet sein, die Relativstellung zwischen dem Schwungrad und dem Magnetelement dadurch einzustellen, dass die Position des Magnetelements über den Schrittmotor entlang eines Kreisbogens eingestellt wird.

Der Schrittmotor kann eingerichtet sein, die Relativstellung zwischen dem Schwungrad und dem Magnetelement dadurch einzustellen, dass die Position des Magnetelements über den Schrittmotor entlang einer geraden Linie eingestellt wird.

Alternativ kann die Relativstellung zwischen dem Schwungrad und dem Magnetelement über einen Linearmotor eingestellt werden. In einer weiteren alternativen Ausführungsform kann die Relativstellung zwischen dem Schwungrad und dem Magnetelement über einen Servomotor eingestellt werden.

Die Einstelleinrichtung kann eingerichtet sein, die Relativstellung zwischen dem Schwungrad und dem Magnetelement zu kalibrieren.

Das Kalibrieren kann der Bestimmung einer Referenzposition des Magneten in Bezug auf das Schwungrad dienen. Das Kalibrieren kann beispielsweise der Bestimmung einer bestimmten Relativstellung zwischen dem Schwungrad und dem Magnetelement dienen. Die Kalibrierung kann bei Inbetriebnahme des Trainingsgeräts erfolgen. Alternativ kann die Kalibrierung als Reaktion auf eine Eingabe des Nutzers über die Benutzerschnittstelle (Benutzereingabesignale) erfolgen. Das Kalibrieren kann bevorzugt bei stillstehendem Schwungrad erfolgen.

In einer beispielhaften Ausführungsform kann das Kalibrieren dadurch realisiert werden, dass das Magnetelement und das Schwungrad in unmittelbaren Kontakt gebracht werden und dadurch die Kontaktposition definiert wird. Die Kontaktposition kann als Referenzposition für weitere Relativstellungen fungieren. Bei der Kontaktposition kann das Magnetelement, insbesondere das Zwischenelement, die Mantelfläche (radial umlaufende Außenfläche) des Schwungrads kontaktieren.

Beispielsweise kann das Magnetelement auf Anschlag bis zum Schwungrad gebracht werden. Diese Referenzposition (Kontaktposition) kann als Nullabstand / Nullwinkel (Nullpunkt) definiert werden. Weitere Abstände bzw. Winkel des Magnetelements um die Magnetelementrotationsachse können auf Basis dieses Nullabstands / Nullwinkels ermittelt werden.

Das Magnetelement kann z. B. durch einen Schrittmotor auf Anschlag bis zum Schwungrad gebracht werden. Der Anschlag kann über einen Sensor oder sensorlos erkannt werden. Eine sensorlose Anschlagserkennung kann beispielsweise mit einer Überlasterkennung des Schrittmotors erfolgen. Der Zustand des Anschlags ist indikativ für den Nullabstand zwischen dem Magnetelement und dem Schwungrad und / oder den Nullwinkel des Magnetelements um die Magnetelementrotationsachse. Über eine schrittweise Variation des Magnetfelds im Schrittmotor kann ausgehend vom Nullabstand der Abstand zwischen dem Magnetelement und dem Schwungrad schrittweise variiert werden und / oder ausgehend vom Nullwinkel der Winkel des Magnetelements um die Magnetelementrotationsachse schrittweise variiert werden. Je schrittweiser Variation des Abstands kann der Abstand zwischen dem Magnetelement und dem Schwungrad mit bekannter Schrittweise verändert werden. Je schrittweiser Variation des Winkels kann der Winkel um die Magnetelementrotationsachse mit bekannter Schrittweise verändert werden. Der Abstand zwischen dem Magnetelement und dem Schwungrad kann ausgehend von dem Nullpunkt und den erfolgten Abstandschritten bestimmt werden. Der Winkel des Magnetelements um die Magnetelementrotationsachse kann ausgehend von dem Nullwinkel und den erfolgten Winkelschritten bestimmt werden. Während des Betriebs des Schrittmotors kann es zu Störungen kommen, sodass der Abstand / Winkel, der ausgehend von dem Nullpunkt / Nullwinkel und den erfolgten Schritte bestimmt wird, nicht mit dem tatsächlichen Abstand / Winkel übereinstimmt. Die Bestimmung des Abstands / Winkels kann einen Fehler aufweisen. Die Kalibrierung kann den Fehler beseitigen. Mit der Bestimmung eines Referenzpunktes, z. B. über das Bestimmen des Nullabstands zwischen dem Magnetelement und dem Schwungrad bzw. dem Nullwinkel des Magnetelements um die Magnetelementrotationsachse, kann der Fehler der Abstandsbestimmung behoben werden.

Mit der Kalibrierung des Abstands / Winkels lässt sich der Widerstand der Wiederstandeinrichtung präzise einstellen. Das kann für eine realitätsnahe Simulation der Ruderbewegung vorteilhaft sein.

Die Steuereinrichtung kann mit einer Speichereinrichtung verbunden und eingerichtet sein, im Betrieb als Eingangssignale über den Signaleingang Speicherdaten von der Speichereinrichtung zu empfangen. Die Speicherdaten können indikativ für wenigstens eine Einstellung der Relativstellung / und oder den Relativstellungsverlauf zwischen dem Schwungrad und dem Magnetelement sein (Relativstellungsdaten). Ein gespeicherter Relativstellungswert kann eine Relativstellung zwischen dem Schwungrad und dem Magnetelement anzeigen. Die Speicherdaten können gespeicherte Sensordaten des Trainingsgeräts oder eines weiteren Trainingsgeräts aufweisen (Trainingsgerätdaten). Die Speicherdaten können gespeicherte Sensordaten eines realen Ruderers oder konstruierte Sensordaten eines virtuellen Ruderers aufweisen (Rudererdaten).

Die Speicherdaten können wenigstens einen Widerstandsfaktor anzeigen. Widerstandsfaktoren können der zu simulierende Bootstyp, Einstellung und Art der Ruder (Riemen oder Skulls sowie Blattform), die zu simulierende Strömung, der zu simulierende Wind, das zu simulierende Gewicht des Ruderers oder der Ruderer (Mannschaftsboot) sein (Widerstandsfaktordaten).

In einer beispielhaften Ausführungsform kann der Relativstellungsverlauf zwischen dem Magneten und dem Schwungrad während der Zugbewegung entsprechend gespeicherter Relativstellungsdaten eingestellt werden. Insbesondere kann der Relativstellungsverlauf des Ruderschlags entsprechend gespeicherter Relativstellungsdaten und Sensordaten eingestellt werden. Relativstellungsdaten können Relativstellungswerte umfassen, die jeweiligen Sensordaten zugeordnet sind.

Bevorzugt kann die Relativstellung in Abhängigkeit der gespeicherten Relativstellungsdaten und der Griffpositionsdaten eingestellt werden. Die Speicherdaten können den Griffpositionen jeweils zugeordnete Relativstellungswerte umfassen. Die Relativstellung zwischen dem Schwungrad und dem Magnetelement kann mittels Steuersignalen derart eingestellt werden, dass die Relativstellung entsprechend dem gespeicherten Relativstellungswert für die aktuell gemessene Griffposition eingestellt wird.

Die Relativstellung kann in Abhängigkeit der gespeicherten Relativstellungsdaten und der Phase der Ruderbewegung eingestellt werden (die Phase des Ruderschlages kann zumindest in zwei und bevorzugt in mehrerer Phasen unterteilt werden). Die Phase der Ruderbewegung kann mittels der Griffpositionsdaten bestimmt werden.

Über die gespeicherten Relativstellungsdaten und die Bestimmung der Phase des Ruderschlags kann der Widerstand des Trainingsgeräts während der Zugphase an einen Widerstandsverlauf eines realen Standardruderschlags vordefinierter Kraft angeglichen werden. Der Relativstellungsverlauf entsprechend Relativstellungsdaten und der Phase des Ruderschlags kann einen Basisrelativstellungsverlauf bilden.

Über die Bestimmung der Rotationsgeschwindigkeit des Schwungrads kann die vom Nutzer auf das Widerstandelement eingebrachte Kraft ermittelt werden. Über die gespeicherten Relativstellungsdaten, die Bestimmung der vom Nutzer eingebrachten Kraft und optional die Bestimmung der Phase des Ruderschlags kann der Widerstand des Trainingsgeräts während der Zugphase an einen Widerstandsverlauf eines realen Standardruderschlags mit einer Kraft, die der vom Nutzer eingebrachten Kraft entspricht, angeglichen werden.

In einer Beispielhaften Ausführungsform kann vorgesehen sein, für ein Standardboot, mit einem Standardnutzer (Standardgewicht und Standardrudertechnik) und unter Standardbedingungen (vorbestimmte Bedingungen, d. h. beispielsweise keine Strömung, kein Wind, etc.) die Ruderbewegung zu simulieren. Bei dieser Ausführungsform kann angenommen werden, dass für die Bestimmung der simulierten Bootsgeschwindigkeit nur die vom Nutzer eingebrachte Kraft eine Unbekannte darstellt. Über die Griffpositionsdaten kann die Zugphase der Ruderbewegung ermittelt werden. Es kann angenommen werden, dass der Nutzer nur in dieser Phase eine Kraft auf das Trainingsgerät übertragen kann. Die Kraft lässt sich beispielsweise über die Relativstellung zwischen dem Magneten und dem Schwungrad und der Rotationsgeschwindigkeitsänderung des Schwungrads während der Zugphase bestimmen. Die Rotationsgeschwindigkeitsänderung des Schwungrads kann beispielsweise durch Bestimmung des Unterschieds der Rotationsgeschwindigkeit des Schwungrads zwischen dem Ende und dem Anfang der Zugphase bestimmt werden. Für eine bessere Auflösung der Rotationsgeschwindigkeitsänderung und damit des Krafteintrags des Nutzers auf das Trainingsgerät kann die Rotationsgeschwindigkeitsänderung innerhalb der Zugphase ermittelt werden (z. B. über die zeitliche Ableitung der Rotationsgeschwindigkeit). Mit dem ermittelten Krafteintrag des Nutzers auf das Trainingsgerät seit Beginn des Trainings kann die simulierte Bootsgeschwindigkeit bestimmt werden. Der Krafteintrag des Nutzers auf das Trainingsgerät während der Zugphase kann einer Beschleunigung des Boots entsprechen. Während der Erholungsphase kann angenommen werden, dass auf das zu simulierende Boot lediglich eine Reibungskraft (Wasser, Luft, etc.) wirkt, die das Boot abbremst.

Insbesondere kann die Steuereinrichtung eingerichtet sein, die simulierte Bootsgeschwindigkeit als Reaktion auf das Empfangen von Eingangssignalen zu ermitteln. In einer bevorzugten Ausführungsform kann die Steuereinrichtung eingerichtet sein, die simulierte Bootsgeschwindigkeit als Reaktion auf das Empfangen von Rotationsgeschwindigkeitssignalen zu ermitteln.

Die Speicherdaten können Relativstellungswerte umfassen, die jeweils den simulierten Bootsgeschwindigkeiten zugeordnet sind.

Die Relativstellung zwischen dem Magnetelement und dem Schwungrad kann in Abhängigkeit der ermittelten simulierten Bootsgeschwindigkeit und dem der simulierten Bootsgeschwindigkeit zugeordneten Relativstellungswert entsprechend der gespeicherten Relativstellungsdaten eingestellt werden. Der Abstand zwischen dem Magnetelement und dem Schwungrad kann zu Beginn der Zugphase beispielsweise kleiner sein als am Ende der Zugphase. Alternativ oder ergänzend kann der Überlappungsbereich und / oder der Bereich des Schwungrads, der von dem Magnetfeld durchdrungen wird, zu Beginn der Zugphase größer sein als am Ende der Zugphase.

Alternativ kann die simulierte Bootsgeschwindigkeit einmalig während einer oder mehrerer Wiederholungen der Ruderbewegung bestimmt werden. Die Speicherdaten können den Griffpositionen zugeordnete Relativstellungswerte für jeweilige Bootsgeschwindigkeiten umfassen. Die Relativstellung zwischen dem Magnetelement und dem Schwungrad kann als Reaktion auf das Ermitteln der Bootsgeschwindigkeit (einmalig während eines Ruderschlags / mehrerer Ruderschläge, bevorzugt mehrmalig während eines Ruderschlags) und der Griffposition entsprechend der Speicherdaten, die den aktuellen Griffpositionen zugeordnete Relativstellungswerte für die aktuelle Bootsgeschwindigkeit umfassen, eingestellt werden.

Zusätzlich können die Speicherdaten auch weitere Informationen umfassen. Insbesondere für das Simulieren von Mannschaftsrudern können die Speicherdaten gespeicherte Sensordaten wenigstens eines Betriebsparameters des Trainingsgeräts und des weiteren Trainingsgerätes oder einer Vielzahl weiterer Trainingsgeräte umfassen.

Des Weiteren können Speicherdaten gespeicherte Sensordaten eines realen Ruderers umfassen, damit beispielsweise die Möglichkeit besteht, die Ruderbewegung mit / gegen Ruderprofis zu simulierten (z. B. Simulation eines Mannschaftsboots mit Ruderprofis).

Es kann weiterhin vorgesehen sein, die Bootsgeschwindigkeit exakter zu bestimmen. Zur exakteren Bestimmung der Bootsgeschwindigkeit können Ruderfehler über die Sensordaten ermittelt werden. Außerdem kann der Nutzer über die Benutzerschnittstelle weitere Angaben betreffend Randbedingungen eingeben. Beispielsweise kann der Nutzer die Widerstandsfaktordaten: sein Gewicht, den zu simulierenden Bootstyp (Rennboot oder Gigboot sowie den Hersteller), die zu simulierende Strömung, den zu simulierenden Wind oder die zu simulierende Art der Ruder (Riemen oder Skulls sowie Blattform) eingeben. Speicherdaten können die Widerstandsfaktordaten umfassen. Die Speicherdaten können den Griffpositionen zugeordnete Relativstellungswerte für jeweilige Bootsgeschwindigkeiten und Widerstandsfaktordaten umfassen. Bei gleichbleibendem Krafteintrag des Nutzers auf das Trainingsgerät kann die Bootsgeschwindigkeit je nach bereitgestellten Widerstandsfaktordaten variieren. Die Bootsgeschwindigkeit kann in Abhängigkeit der Widerstandsfaktordaten ermittelt werden.

Die Relativstellung zwischen dem Magnetelement und dem Schwungrad kann als Reaktion auf das Ermittelten der Bootsgeschwindigkeit in Abhängigkeit des Krafteintrages durch den Nutzer und den Widerstandsfaktordaten (insbesondere der der Bootsgeschwindigkeit zugeordnete Relativstellungswerte) eingestellt werden.

Die Steuereinrichtung kann mit einer weiteren Sensoreinrichtung eines weiteren Trainingsgeräts verbunden und eingerichtet sein, im Betrieb als Eingangssignale über den Signaleingang weitere Sensorsignale von der weiteren Sensoreinrichtung des weiteren Trainingsgeräts zu empfangen, wobei die weiteren Sensorsignale wenigstens einen Betriebsparameter des weiteren Trainingsgeräts anzeigen.

Das Bereitstellen weiterer Sensordaten weiterer Trainingsgeräte dient dem Simulieren des Mannschaftsruderns. Das Mannschaftsrudern kann insbesondere *"live"* simuliert werden.

Der Widerstand des jeweiligen Trainingsgeräts bzw. die Relativstellung zwischen dem Magnetelement und dem Schwungrad kann in Abhängigkeit der Sensorsignale des Trainingsgeräts und der Sensorsignale des weiteren Trainingsgeräts (der Vielzahl von weiteren Trainingsgeräten) eingestellt werden, insbesondere derart, dass jeder Nutzer im simulierten Mannschaftsboot individuell den Widerstand erfährt, den auch jeder Ruderer beim Rudern in einem realen Mannschaftsboot erfahren würde. Die Relativstellung zwischen dem Magnetelement und dem Schwungrad kann beispielsweise danach eingestellt werden, wie sehr die Mannschaft die Ruderbewegung im Takt ausführt.

Über die Benutzerschnittstelle kann beispielsweise eingegeben werden, mit wie vielen Nutzern das Mannschaftsrudern simuliert werden soll. Es können Speicherdaten mit Relativstellungsdaten für mehrerer Nutzer, insbesondere für zwei, vier und acht Nutzer, bereitgestellt sein. Entsprechend der Bestimmung der Bootsgeschwindigkeit eines Nutzers kann die Bootsgeschwindigkeit des Mannschaftsboots in Abhängigkeit des Krafteintrags der mehreren Nutzer ermittelt werden. Die Speicherdaten können den simulierten Bootsgeschwindigkeiten des Mannschaftsruderns jeweils zugeordnete Relativstellungswerte umfassen.

Die Relativstellung zwischen dem Magnetelement und dem Schwungrad kann in Abhängigkeit der ermittelten simulierten Bootsgeschwindigkeit des Mannschaftboots und des der Bootsgeschwindigkeit des Mannschaftboots zugeordneten Relativstellungswerts eingestellt werden.

Analog dem Einzelrudern kann die Relativstellung zwischen dem Magnetelement und dem Schwungrad in Abhängigkeit von Speicherdaten, die zu Sensordaten (insbesondere zu Sensordaten der Sensoreinrichtung und der weiteren Sensoreinrichtung) zugeordnete Relativstellungswerte umfassen, entsprechend aktuell ermittelter Sensordaten eingestellt werden.

Im Falle dessen, dass die Mannschaft des Mannschaftboots nicht im Takt rudert, kann ein ungewöhnlich hoher oder ungewöhnlich niedriger (Trainings)Widertand von der Widerstandseinrichtung bereitgestellt sein. Dieser ungewöhnliche Widerstand kann dem Nutzer direktes Feedback darüber geben, ob er die Ruderbewegung mit seiner Mannschaft im Takt ausführt oder nicht. Beispielsweise kann der Widerstand für den Nutzer ungewöhnlich hoch sein, wenn er die Zugphase vor seiner Mannschaft beginnt. Der Abstand zwischen dem Magnetelement und dem Schwungrad des Trainingsgeräts kann klein sein, wenn der Nutzer des Trainingsgeräts die Zugphase vor seiner Mannschaft beginnt. Alternativ oder ergänzend kann der Überlappungsbereich und / oder der Bereich des Schwungrads, der von dem Magnetfeld durchdrungen wird, größer sein, wenn der Nutzer des Trainingsgeräts die Zugphase vor seiner Mannschaft beginnt. Der Widerstand für den Nutzer kann ungewöhnlich niedrig sein, wenn er die Zugphase nach seiner Mannschaft beginnt. Der Abstand zwischen dem Magnetelement und dem Schwungrad des Trainingsgeräts kann groß sein, wenn der Nutzer des Trainingsgeräts die Zugphase nach seiner Mannschaft beginnt. Alternativ oder ergänzend kann der Überlappungsbereich und / oder der Bereich des Schwungrads, der von dem Magnetfeld durchdrungen wird, kleiner sein, wenn der Nutzer des Trainingsgeräts die Zugphase nach seiner Mannschaft beginnt.

In Verbindung mit dem Verfahren zum Betreiben eines Trainingsgeräts zum Simulieren einer Ruderbewegung können die vorangehend im Zusammenhang mit dem Trainingsgerät beschriebene Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert, welche den Gegenstand der Erfindung jedoch nicht beschränken. Hierbei zeigen:
- Fig. 1: eine schematische Darstellung eines Blockschaltbildes des Trainingsgeräts;
- Fig. 2: eine schematische grafische Darstellung des Trainingsgeräts;
- Fig. 3: eine schematische grafische Darstellung von zwei Trainingsgeräten;
- Fig. 4: eine schematische Darstellung eines typischen (Trainings)Widerstandsverlaufs während einer realen Ruderbewegung;
- Fig. 5a: eine schematische Darstellung des Schwungrads und des Magnetelements in Blickrichtung senkrecht zum Schwungrad;
- Fig. 5b: eine schematische Darstellung des Schwungrads und des Magnetelements in Blickrichtung parallel zum Schwungrad;
- Fig. 6a-d: erste schematische Darstellungen verschiedener Relativstellungen zwischen dem Schwungrad und dem Magnetelement in Blickrichtung senkrecht zum Schwungrad; und
- Fig. 7: zweite schematische Darstellungen verschiedener Relativstellungen zwischen dem Schwungrad und dem Magnetelement in Blickrichtung senkrecht zum Schwungrad.

Die Figuren sind nicht notwendigerweise detailgetreu und maßstabsgetreu und können vergrößert oder verkleinert dargestellt sein, um einen besseren Überblick zu bieten. Daher sind hier offenbarte funktionale Einzelheiten nicht einschränkend zu verstehen, sondern lediglich als anschauliche Grundlage, die dem Fachmann auf diesem Gebiet der Technik Anleitung bietet, um die vorliegende Erfindung auf vielfältige Weise einzusetzen.

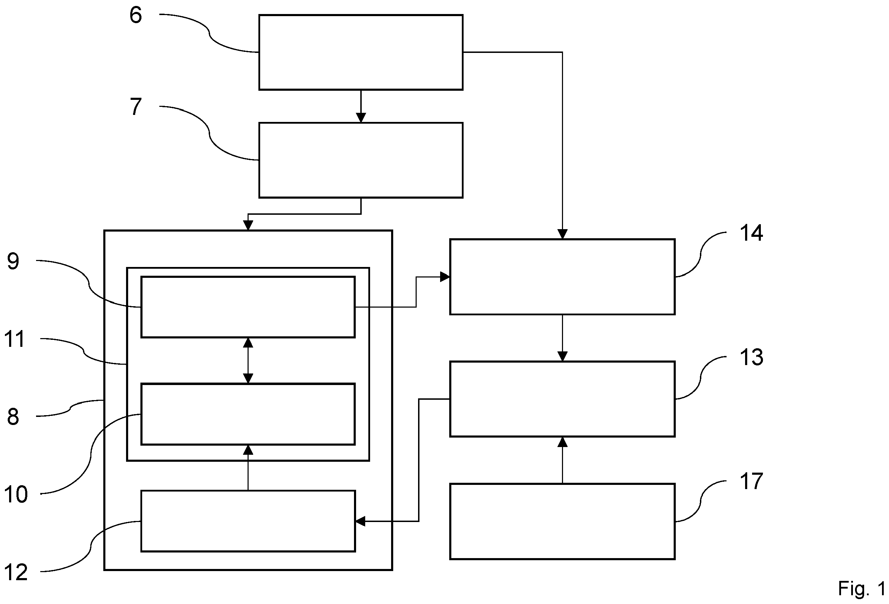

Fig. 1 zeigt eine schematische Darstellung von Komponenten oder Modulen des Trainingsgeräts 1. Über die Griffeinrichtung 6 kann das Trainingsgerät 1 eine Kraft empfangen. Diese Kraft wird im Betrieb von einem Nutzer, der die Ruderbewegung ausführt, ausgeübt. Während der Zugphase zieht der Nutzer mit einer (Zug)Kraft an einem Griff der Griffeinrichtung 6. Die Zugkraft wird von der Kraftübertragungseinrichtung 7 an die Widerstandseinrichtung 8 übertragen. Die Widerstandseinrichtung 8 kann einen Widerstand bereitstellen und die Zugbewegung des Nutzers bremsen. Der bereitgestellte Widerstand wirkt der Zugkraft des Nutzers entgegen. Der Widerstand wird von einer Wirbelstrombremseinrichtung 11 erzeugt. Die Wirbelstrombremseinrichtung 11 umfasst ein Schwungrad 9 und ein Magnetelement 10. Die Trägheit des Schwungrads 9 kann einen ersten Widerstand der Wirbelstrombremseinrichtung 11 darstellen.

Ein zweiter Widerstand kann von einem Wirbelstrom bereitgestellt werden, der von dem Magnetelement 10 in dem rotierenden Schwungrad 9 induziert wird und der Rotation des Schwungrads 9 entgegenwirkt. Der Widerstand (insbesondere der zweite Widerstand) der Wirbelstrombremseinrichtung 11 ist über die Relativstellung zwischen dem Schwungrad 9 und dem Magnetelement 10 einstellbar. Dem Einstellen der Relativstellung zwischen dem Schwungrad 9 und dem Magnetelement 10 dient die Einstelleinrichtung 12. Die Einstelleinrichtung 12 ist mit einer Steuereinrichtung 13 verbunden. Die Steuereinrichtung 13 stellt als Reaktion auf das Empfangen von Eingangssignalen über einen Signaleingang der Steuereinrichtung 13 Steuersignale bereit. Über einen Signalausgang der Steuereinrichtung 13 werden die Steuersignale an die Einstelleinrichtung 12 ausgegeben. Als Reaktion auf das Empfangen der Steuersignale stellt die Einstelleinrichtung 12 die Relativstellung zwischen dem Schwungrad 9 und dem Magnetelement 10 in Echtzeit den Steuersignalen entsprechend ein. Die Steuereinrichtung 13 kann beispielsweise eingerichtet sein, von der Speichereinrichtung 17 Eingangssignale zu empfangen.

Zusätzlich oder alternativ kann die Steuereinrichtung 13 beispielsweise eingerichtet sein, von der Sensoreinrichtung 14 Eingangssignale zu empfangen. Die von der Steuereinrichtung 13 als Reaktion auf das Empfangen von Eingangssignalen über einen Signaleingang der Steuereinrichtung 13 bereitgestellten Steuersignale können von Signalen der Sensoreinrichtung 14 und / oder der Speichereinrichtung 17 abhängig sein. Die Sensoreinrichtung 14 kann Sensordaten ermitteln, die wenigstens einen Betriebsparameter des Trainingsgeräts 1 anzeigen. Die Sensordaten können z. B. Betriebsparameter der Griffeinrichtung 6 und / oder Betriebsparameter des Schwungrads 9 umfassen. Insbesondere können Sensordaten Daten umfassen, die die Position der Griffeinrichtung 6 (Griffpositionssignale) und / oder die Rotationsgeschwindigkeit des Schwungrads 9 (Rotationsgeschwindigkeitssignale) anzeigen.

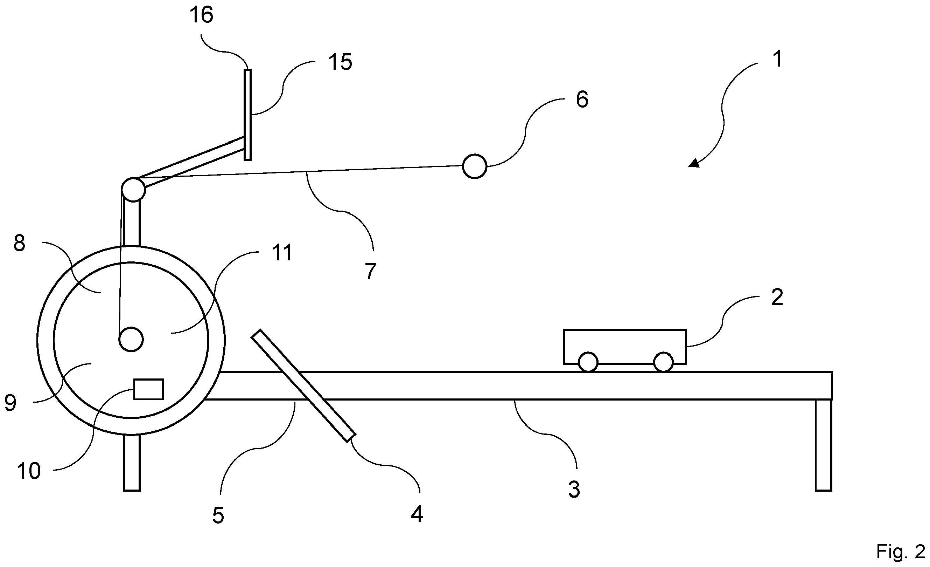

Fig. 2 zeigt eine schematische grafische Darstellung des Trainingsgeräts 1. Das Trainingsgerät 1 umfasst einen Rollsitz 2, eine Führung 3, auf der der Rollsitz linear vor und zurück bewegbar ist, ein Stemmbrett 4, das im Bereich eines Endes der Führung 5 angeordnet ist, eine Griffeinrichtung 6, eine Kraftübertragungseinrichtung 7 und eine Widerstandseinrichtung 8. Die Kraftübertragungseinrichtung 7 und die Widerstandseinrichtung 8 sind miteinander verbunden. Außerdem sind die Kraftübertragungseinrichtung 7 und die Griffeinrichtung 6 miteinander verbunden. Eine Zugkraft des Nutzers, die auf die Griffeinrichtung 6 wirkt, kann über die Kraftübertragungseinrichtung 7 an die Widerstandseinrichtung 8 weitergeleitet werden. Die Widerstandseinrichtung 8 des Trainingsgeräts 1 weist das Schwungrad 9 und das Magnetelement 10 auf. Das Schwungrad 9 und das Magnetelement 10 bilden eine Wirbelstrombremseinrichtung 11. Ferner kann das Trainingsgerät 1 eine Benutzerschnittstelle 16 mit einer Eingabeeinrichtung 15 umfassen. Über die Benutzerschnittstelle 16 kann der Nutzer mit dem Trainingsgerät 1 kommunizieren. Der Nutzer kann über die Benutzerschnittstelle 16 beispielsweise Benutzereingabesignale bereitstellen, die als Eingangssignale von der Steuereinrichtung 13 empfangen werden können. Der Nutzer kann beispielweise über die Benutzerschnittstelle 16 ein spezielles Trainingsprogramm auswählen. Als Reaktion auf die Auswahl des Trainingsprogramms kann der Widerstand der Widerstandseinrichtung 8 entsprechend einem das ausgewählte Trainingsprogramm charakterisierenden Verlauf des Wiederstands während der Ruderbewegung eingestellt werden.

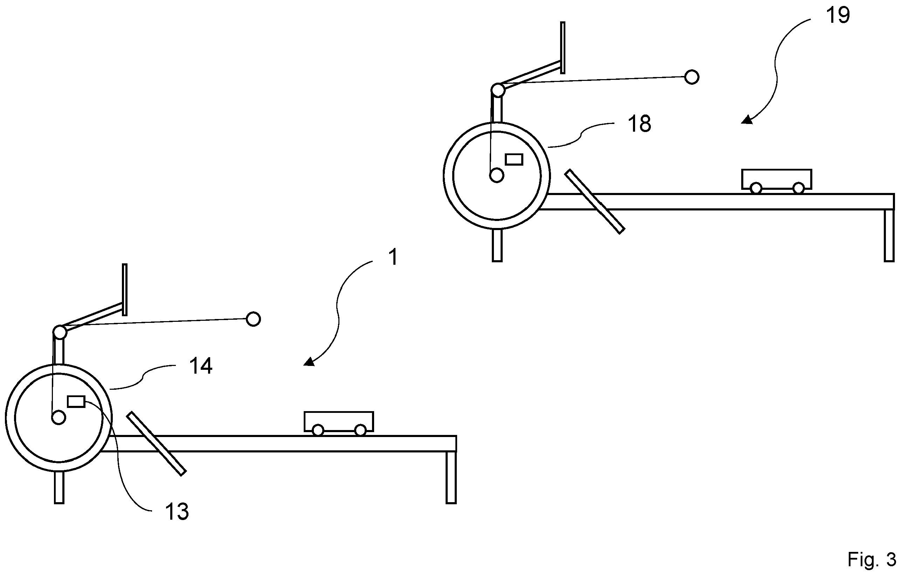

Fig. 3 zeigt eine schematische grafische Darstellung von zwei Trainingsgeräten 1, 19. Beide Trainingsgeräte 1, 19 können eingerichtet sein, miteinander zu kommunizieren. In dem dargestellten Fall kann das Mannschaftrudern eines Boots mit zwei Ruderern simuliert werden. Alternativ können analog eine Vielzahl an Trainingsgeräten bereitgestellt werden, um das Rudern in einem Mannschaftsboot mit einer Vielzahl von Ruderern zu simulieren. Im Folgenden wird die Simulation des Mannschaftsruderns aus der Sicht des Trainingsgeräts 1 erläutert, ist aber analog auch für das weitere Trainingsgerät 19 anwendbar.

Damit der (Trainings)Widerstand des Trainingsgeräts 1 beim Einzelrudern realitätsnah über die Relativstellung zwischen dem Schwungrad 9 und dem Magnetelement 10 eingestellt werden kann, können Sensorsignale einer Sensoreinrichtung 14 bereitgestellt sein. Über die Sensorsignale kann ein Sollwiderstand ermittelt werden, der dem Widerstand entspricht, der sich bei Übertragen der Ruderbewegung auf dem Trainingsgerät 1 auf ein reales Ruderboot ergeben würde. Die Relativstellung zwischen dem Schwungrad 9 und dem Magnetelement 10 kann in Abhängigkeit der Sensorsignale derart eingestellt werden, dass der (Trainings)Widerstand des Trainingsgeräts 1 an den Sollwiderstand angeglichen wird.

Im in Fig. 3 dargestellten Fall kann das Rudern eines Mannschaftsboots mit zwei Ruderern simuliert werden. Dafür werden zwei Trainingsgeräte 1, 19, das Trainingsgerät 1 und das weitere Trainingsgerät 19, bereitgestellt. Um realitätsnahes Mannschaftrudern zu ermöglichen, können sowohl die Sensoreinrichtung 14 des Trainingsgeräts 1 als auch die weitere Sensoreinrichtung 18 des weiteren Trainingsgeräts 19 bereitgestellt sein. Damit der (Trainings)Widerstand des Trainingsgeräts 1 beim Mannschaftsrudern mit zwei Ruderern realitätsnah über die Relativstellung zwischen dem Schwungrad 9 und dem Magnetelement 10 eingestellt werden kann, können Sensorsignale der Sensoreinrichtung 14 und der weiteren Sensoreinrichtung 18 bereitgestellt sein. Sensorsignale der Sensoreinrichtung 14 und der weiteren Sensoreinrichtung 18 können von der Steuereinrichtung 13 des Trainingsgeräts 1 empfangen werden. Über die Sensorsignale der Sensoreinrichtung 14 und der weiteren Sensoreinrichtung 18 kann ein Mannschaftssollwiderstand ermittelt werden, der dem Widerstand entspricht, der sich bei Übertragen der Ruderbewegung des Nutzers auf dem Trainingsgerät 1 und der Ruderbewegung eines weiteren Nutzers auf dem weiteren Trainingsgerät 19 auf ein reales Ruderboot (in diesem Fall ein Zweier (Ruderboot für zwei Ruderer)) ergeben würde. Die Relativstellung zwischen dem Schwungrad 9 und dem Magnetelement 10 des Trainingsgeräts 1 kann in Abhängigkeit der Sensorsignale der Sensoreinrichtung 14 und der weiteren Sensoreinrichtung 18 derart eingestellt werden, dass der (Trainings)Widerstand des Trainingsgeräts 1 an den Mannschaftssollwiderstand angeglichen wird.

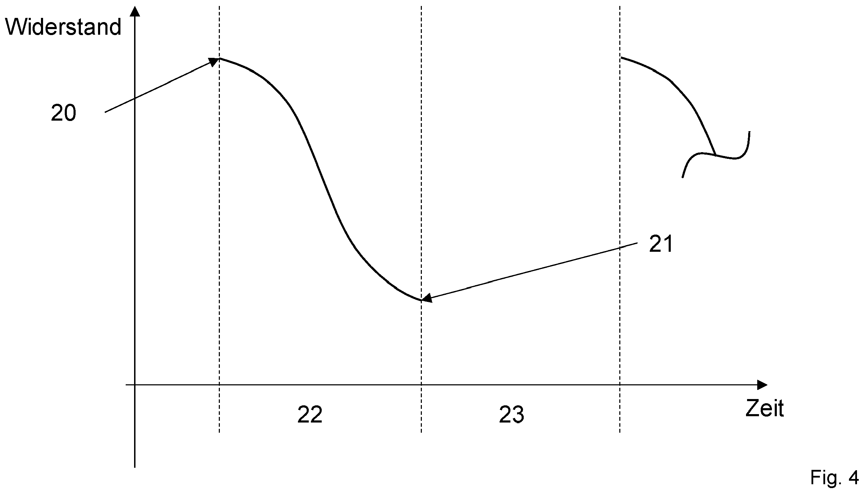

Fig. 4 zeigt eine schematische Darstellung eines typischen (Trainings)Widerstandsverlaufs während einer realen Ruderbewegung. Insbesondere der Widerstand in Abhängigkeit der Zeit ist dargestellt. Während der Erholungsphase 23 wirkt im Allgemeinen keine Widerstandskraft auf den Ruderer. Während der Erholungsphase 23 sind die Blätter der Ruder (Skulls oder Riemen) nicht im Wasser und der Ruderer bewegt sich zurück in die Auslageposition 20. Die Auslageposition 20 ist der Beginn der Zugphase 22. In der Auslageposition 20 sind die Blätter der Ruder (Skulls oder Riemen) nach der Erholungsphase 23 erstmalig im Wasser. Durch Ziehen der Blätter durch das Wasser während der Zugphase 22 wird das Boot beschleunigt. Während der Zugphase 22 liegt im Allgemeinen ein (Trainings)Widerstand vor, der der Zugbewegung entgegenwirkt. Bei realem Rudern wird dieser Widerstand insbesondere durch den Widerstand des Wassers, der auf die sich bewegenden Blätter wirkt, verursacht. In einem beispielhaften Ruderschlag ist die Bootsgeschwindigkeit zu Beginn der Zugphase 22 geringer als am Ende. Entsprechend ist der (Trainings)Widerstand zu Beginn der Zugphase 22 größer als am Ende. Die Zugphase 22 wird in der Rücklageposition 21 mit Herausnehmen der Blätter aus dem Wasser beendet. Die Rücklageposition 21 ist der Beginn der Erholungsphase 23. Während der Ruderbewegung wechseln sich Erholungsphase 23 und Zugphase 22 alternierend ab. Der genaue (Trainings)Widerstandsverlauf während realem Rudern ist von einer Vielzahl von Parametern abhängig und in Fig. 4 nur exemplarisch dargestellt.

Bei der Simulation der Ruderbewegung mit einem Trainingsgerät kann vorgesehen sein, den realen Widerstandsverlauf (beispielhaft in Fig. 4 dargestellt) zu rekonstruieren. Um die Vielzahl von Parametern abzuschätzen, die den genauen (Trainings)Widerstandsverlauf während realem Rudern beeinflussen, kann weiterhin vorgesehen sein eine Sensoreinrichtung 14 bereitzustellen, die eingerichtet ist, Sensorsignale bereitzustellen, wobei die Sensorsignale wenigstens einen Betriebsparameter anzeigen.

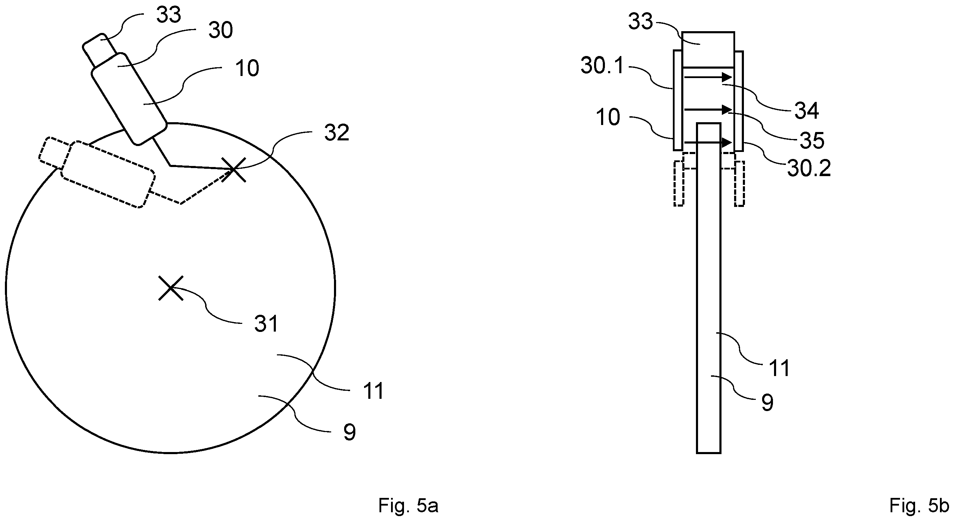

Fig. 5a zeigt eine schematische Darstellung des Schwungrads 9 und des Magnetelements 10 in Blickrichtung senkrecht zum Schwungrad 9. Das Magnetelement 10, welches mit durchgezogenen Linien dargestellt ist, zeigt das Magnetelement 10 in einer ersten Relativstellung zwischen dem Schwungrad 9 und dem Magnetelement 10. Das Magnetelement 10, welches mit gestrichelten Linien dargestellt ist, zeigt das Magnetelement 10 in einer zweiten Relativstellung zwischen dem Schwungrad 9 und dem Magnetelement 10. Das Magnetelement 10 kann mittels Rotation um die Magnetelementrotationsachse 32, welche von der Rotationsachse des Schwungrads 31 beabstandet ist, von der ersten in die zweite Relativstellung gebracht werden. Der Überlappungsbereich zwischen dem Magnetelement 10 und dem Schwungrad 9 ist in der zweiten Relativstellung größer als in der ersten Relativstellung. Bei der zweiten Relativstellung wird das Schwungrad 9 also in einem größeren Bereich von dem homogenen Magnetfeld 35 durchdrungen. Bei der zweiten Relativstellung stellt die Wirbelstrombremseinrichtung 11 also einen höheren Widerstand als bei der ersten Relativstellung bereit. Fig. 5 zeigt, dass das Magnetelement 10 über den äußeren Rand des Schwungrads 9 hinaus verlagerbar ist.

Fig. 5b zeigt eine schematische Darstellung des Schwungrads 9 und des Magnetelements 10 in Blickrichtung parallel zum Schwungrad 9. Das Magnetelement 10 umfasst einen ersten Magnetelementabschnitt 30.1 und einen zweiten Magnetelementabschnitt 30.2, die voneinander beabstandet sind, derart, dass in Blickrichtung parallel zum Schwungrad 9 das Schwungrad 9 zwischen dem ersten Magnetelementabschnitt 30.1 und dem zweiten Magnetelementabschnitt 30.2 angeordnet ist. Der erste und der zweite Magnetelementabschnitt 30 sind baugleich und hinsichtlich der Mittelebene des Schwungrads gespiegelt. Zwischen dem ersten und zweiten Magnetelementabschnitt 30 ist ein Zwischenraum 34 bereitgestellt. Ein homogenes Magnetfeld 35 bildet den Zwischenraum 34. In dem Zwischenraum 34 befindet sich ein Teilbereich des Schwungrads 9. Dieser Teilbereich des Schwungrads 9 stellt den Bereich des Schwungrads 9 dar, welcher von dem homogenen Magnetfeld 35 des Magnetelements 10 durchdrungen wird. Die Magnetelementabschnitte 30 sind mittels des Zwischenelements 33 voneinander beabstandet und miteinander verbunden. Das Zwischenelement 33 überlappt nicht mit dem Zwischenraum 34. Die Magnetelementabschnitte 30 und das Zwischenelement 33 bilden ein Hufeisenmagnet.

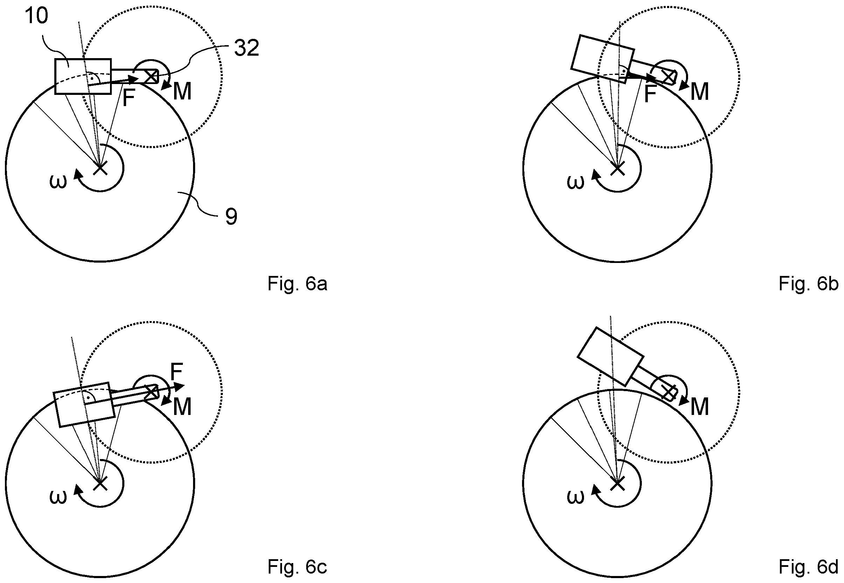

Fig. 6a-d zeigen schematische Darstellungen verschiedener Relativstellungen zwischen dem Schwungrad 9 und dem Magnetelement 10 in Blickrichtung senkrecht zum Schwungrad 9. Die Fig. 6a-d zeigen eine exemplarische Ausführungsform eines Magnetelements 10, das so eingerichtet ist, dass eine beim Bereitstellen des Widerstands auf das Magnetelement 10 wirkende Kraft F für mehrere verschiedene Relativstellungen zwischen dem Schwungrad 9 und dem Magnetelement 10 (im Wesentlichen) durch die Magnetelementrotationsachse 32 verläuft, insbesondere derart, dass auf das Magnetelement 10 kein Drehmoment M wirkt (M = 0). Das in den Fig. 6a-d gezeigte Magnetelement 10 ist also (im Wesentlichen) momentenfrei. Ferner kann das dargestellte Magnetelement 10 zwischen mehreren verschiedenen Relativstellungen zwischen dem Schwungrad 9 und dem Magnetelement 10 (im Wesentlichen) kräftefrei verlagert werden (trotz Bereitstellung eines Widerstands).

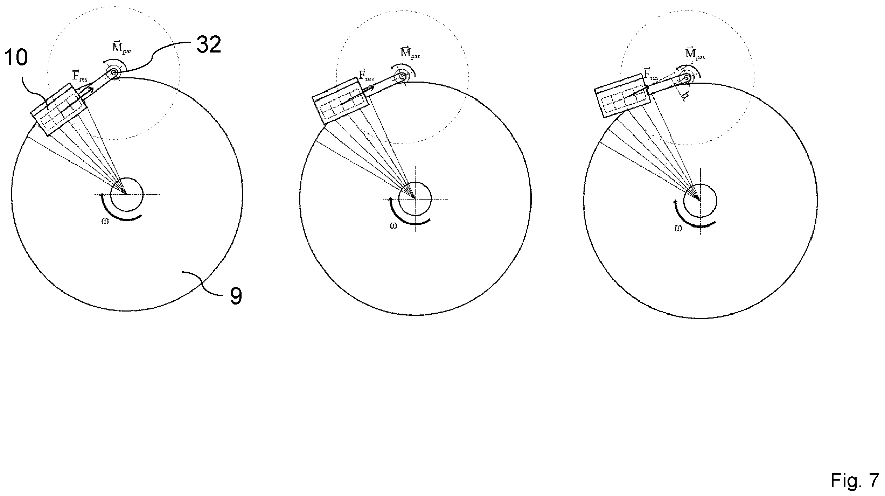

Bei einer gegebenen Winkelgeschwindigkeit ω des Schwungrads 9 ist die resultierende Kraft F, die auf das Magnetelement 10 wirkt, abhängig von der Größe des vom dem Magnetelement 10 zugeordneten Magnetfeld durchdrungenen Bereichs des Schwungrads 9, d. h. der Größe des Überlappungsbereichs zwischen Magnetelement 10 und Schwungrad 9. Je größer der Überlappungsbereich ist, desto größer ist die resultierende Kraft F. In der Fig. 6c bzw. der linken Darstellung der Fig. 7 ist der Überlappungsbereich und damit auch die resultierende Kraft F maximiert. Für diesen Fall ist sichergestellt, dass die resultierende Kraft F durch die Magnetelementrotationsachse 32 führt. Das aus der resultierenden Kraft F resultierende (Dreh-)Moment M ist dementsprechend 0. Bei Verstellen der Relativstellung des Magnetelements 10 ändern sich sowohl Betrag als auch Richtung der resultierenden Kraft F. Gleichzeitig ändert sich auch der Angriffspunkt der resultierenden Kraft F.

Das Magnetelement 10 in den Fig. 6a-d ist derart angeordnet, dass auch eine solche Verlagerung des Magnetelements 10 zu keinem auf das Magnetelement 10 wirkenden Moment M führt.

In einer alternativen Ausgestaltungsform, welche in der Fig. 7 dargestellt ist, ist das Magnetelement 10 so angeordnet, dass eine solche Verlagerung des Magnetelements 10 dazu führt, insbesondere bei einer zunehmenden Verlagerung aus der momentenfreien Stellung (vgl. linke Darstellung der Fig. 7) heraus, dass die resultierende Kraft F (Fᵣₑₛ) zunehmend davon abweicht, durch die Magnetelementrotationsachse 32 zu verlaufen. Es resultiert ein Hebelarm h, der zunehmend wächst. Nichtsdestotrotz wird das auf das Magnetelement 10 wirkende Moment M (Mₚₐₛ) dadurch minimiert, dass sich die resultierende Kraft F (Fᵣₑₛ) bei zunehmend wachsendem Hebel h verringert, da sich der Überlappungsbereich ebenfalls verringert.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Trainingsgerät
- 2: Rollsitz
- 3: Führung
- 4: Stemmbrett
- 5: Bereich eines Endes der Führung
- 6: Griffeinrichtung
- 7: Kraftübertragungseinrichtung
- 8: Widerstandseinrichtung
- 9: Schwungrad
- 10: Magnetelement
- 11: Wirbelstrombremseinrichtung
- 12: Einstelleinrichtung
- 13: Steuereinrichtung
- 14: Sensoreinrichtung
- 15: Eingabeeinrichtung
- 16: Benutzerschnittstelle
- 17: Speichereinrichtung
- 18: Weitere Sensoreinrichtung
- 19: Weiteres Trainingsgerät
- 20: Auslageposition
- 21: Rücklageposition
- 22: Zugphase
- 23: Erholungsphase
- 30: erster und zweiter Magnetelementabschnitt
- 30.1: erster Magnetelementabschnitt
- 30.2: zweiter Magnetelementabschnitt
- 31: Rotationsachse des Schwungrads
- 32: Magnetelementrotationsachse
- 33: Zwischenelement
- 34: Zwischenraum
- 35: homogenes Magnetfeld

## Patentansprüche

1. Trainingsgerät (1) zum Simulieren einer Ruderbewegung, mit:
- einem Rollsitz (2), der auf einer Führung (3) linear vor und zurück bewegbar ist;
- einem Stemmbrett (4), das im Bereich eines Endes der Führung (5) angeordnet ist;
- einer Griffeinrichtung (6);
- einer Kraftübertragungseinrichtung (7), die mit der Griffeinrichtung (6) verbunden ist;
- einer Widerstandseinrichtung (8), die
- mit der Kraftübertragungseinrichtung (7) verbunden ist;
- eingerichtet ist, einer von einem Nutzer über die Griffeinrichtung (6) und die Kraftübertragungseinrichtung (7) eingeleiteten Zugbewegung einen Widerstand entgegenzusetzen; und
- zum Bereitstellen des Widerstands eine Anordnung mit einem Schwungrad (9) und einem dem Schwungrad zugeordneten Magnetelement (10) aufweist, mit denen eine Wirbelstrombremseinrichtung (11) gebildet ist;
- einer Einstelleinrichtung (12), die der Widerstandseinrichtung (8) zugeordnet und eingerichtet ist, zum Einstellen der Wirbelstrombremseinrichtung (11) eine Relativstellung zwischen dem Schwungrad (9) und dem Magnetelement (10) einzustellen, wobei das Magnetelement (10) einen ersten Magnetelementabschnitt (30.1) und einen zweiten Magnetelementabschnitt (30.2) aufweist, die voneinander beabstandet sind, derart, dass in Blickrichtung parallel zum Schwungrad (9) das Schwungrad (9) zwischen dem ersten Magnetelementabschnitt (30.1) und dem zweiten Magnetelementabschnitt (30.2) angeordnet ist; und
- einer Steuereinrichtung (13), die mit der Einstelleinrichtung (12) verbunden und eingerichtet ist, als Reaktion auf das Empfangen von Eingangssignalen über einen Signaleingang der Steuereinrichtung (13) Steuersignale bereitzustellen und über einen Signalausgang der Steuereinrichtung (13) an die Einstelleinrichtung (12) auszugeben, derart, dass die Einstelleinrichtung (12) auf den Empfang der Steuersignale die Relativstellung zwischen dem Schwungrad (9) und dem Magnetelement (10) in Echtzeit den Steuersignalen entsprechend einstellt.

2. Trainingsgerät (1) nach Anspruch 1, **dadurch gekennzeichnet, dass** das Magnetelement (10) zum Einstellen der Relativstellung zwischen dem Schwungrad (9) und dem Magnetelement (10) parallel zum Schwungrad (9) verlagerbar ist.

3. Trainingsgerät (1) nach Anspruch 1 oder 2, **dadurch gekennzeichnet, dass** der erste Magnetelementabschnitt (30.1) und der zweite Magnetelementabschnitt (30.2) einander gegenüberliegen und / oder durch ein Zwischenelement (33) voneinander beabstandet sind.

4. Trainingsgerät (1) nach mindestens einem der vorangehenden Ansprüche, **dadurch gekennzeichnet, dass** das Magnetelement (10) als Hufeisenmagnetelement gebildet ist.

5. Trainingsgerät (1) nach mindestens einem der vorangehenden Ansprüche, **dadurch gekennzeichnet, dass** das Magnetelement (10) zum Einstellen der Relativstellung zwischen dem Schwungrad (9) und dem Magnetelement (10) derart verlagerbar ist, dass eine abschnittsweise überlappungsfreie Relativstellung einstellbar ist, bei der in Blickrichtung senkrecht zum Schwungrad (9) das Schwungrad (9) und das Magnetelement (10) zumindest abschnittsweise überlappungsfrei sind.

6. Trainingsgerät (1) nach mindestens einem der vorangehenden Ansprüche, **dadurch gekennzeichnet, dass** das Magnetelement (10) zum Einstellen der Relativstellung zwischen dem Schwungrad (9) und dem Magnetelement (10) um eine Magnetelementrotationsachse (32) rotierbar ist.

7. Trainingsgerät (1) nach Anspruch 6, **dadurch gekennzeichnet, dass** das Magnetelement (10) eingerichtet ist, dass eine beim Bereitstellen des Widerstands auf das Magnetelement (10) wirkende Kraft für mehrere verschiedene Relativstellungen zwischen dem Schwungrad (9) und dem Magnetelement (10) im Wesentlichen durch die Magnetelementrotationsachse (32) verläuft.

8. Trainingsgerät (1) nach mindestens einem der vorangehenden Ansprüche, **dadurch gekennzeichnet, dass** das Magnetelement (10) im Wesentlichen momentenfrei ist und / oder das Magnetelement (10) zwischen mehreren verschiedenen Relativstellungen zwischen dem Schwungrad (9) und dem Magnetelement (10) im Wesentlichen kräftefrei verlagerbar ist.

9. Trainingsgerät (1) nach mindestens einem der vorangehenden Ansprüche, **dadurch gekennzeichnet, dass** das Magnetelement (10) zum Einstellen der Relativstellung zwischen dem Schwungrad (9) und dem Magnetelement (10) über ein selbsthemmendes Getriebe verlagerbar ist.

10. Trainingsgerät (1) nach mindestens einem der vorangehenden Ansprüche, **dadurch gekennzeichnet, dass** die Griffeinrichtung (6) im Wesentlichen parallel zu der Führung (3) vor und zurück bewegbar ist.

11. Verfahren zum Betreiben eines Trainingsgeräts (1) zum Simulieren einer Ruderbewegung, das Trainingsgerät (1) aufweisend:
- einen Rollsitz (2), der auf einer Führung (3) linear vor und zurück bewegbar ist;
- ein Stemmbrett (4), das im Bereich eines Endes der Führung (5) angeordnet ist;
- eine Griffeinrichtung (6);
- eine Kraftübertragungseinrichtung (7), die mit der Griffeinrichtung (6) verbunden ist;
- eine Widerstandseinrichtung (8), die mit der Kraftübertragungseinrichtung (7) verbunden und zum Bereitstellen einer Widerstandskraft eine Anordnung mit einem Schwungrad (9) und einem dem Schwungrad (9) zugeordneten Magnetelement (10) aufweist, mit denen eine Wirbelstrombremseinrichtung (11) gebildet ist;
- eine Einstelleinrichtung (12), die der Widerstandseinrichtung (8) zugeordnet und eingerichtet ist, zum Einstellen der Wirbelstrombremseinrichtung (11) eine Relativstellung zwischen dem Schwungrad (9) und dem Magnetelement (10) einzustellen, wobei das Magnetelement (10) einen ersten Magnetelementabschnitt (30.1) und einen zweiten Magnetelementabschnitt (30.2) aufweist, die voneinander beabstandet sind, derart, dass in Blickrichtung parallel zum Schwungrad (9) das Schwungrad (9) zwischen dem ersten Magnetelementabschnitt (30.1) und dem zweiten Magnetelementabschnitt (30.2) angeordnet ist; und
- eine Steuereinrichtung (13), die mit der Einstelleinrichtung (12) verbunden ist; wobei das Verfahren Folgendes umfasst:
- Bereitstellen einer ersten Widerstandskraft, die einer von einem Nutzer über die Griff-einrichtung (6) und die Kraftübertragungseinrichtung (7) eingeleiteten Zugbewegung entgegenwirkt;
- Empfangen von Eingangssignalen über einen Signaleingang in der Steuereinrichtung (13);
- Bereitstellen von Steuersignalen als Reaktion auf das Empfangen der Eingangssignale in der Steuereinrichtung (13);
- Ausgeben der Steuersignale über einen Signalausgang der Steuereinrichtung (13) an die Einstelleinrichtung (12); und
- Einstellen der Relativstellung zwischen dem Schwungrad (9) und dem Magnetelement (10) in Echtzeit den Steuersignalen entsprechend mittels der Einstelleinrichtung (12), derart, dass eine zweite Widerstandskraft bereitgestellt wird, die von der ersten Widerstandskraft verschieden ist und der von dem Nutzer über die Griffeinrichtung (6) und die Kraftübertragungseinrichtung (7) eingeleiteten Zugbewegung entgegenwirkt.
